# FASCICULE DE BREVET EUROPEEN

(11) **EP 0 667 951 B1**
(45) Date de publication et mention de la délivrance du brevet: **11.12.1996**
(21) Numéro de dépôt: 93924060.2
(22) Date de dépôt: 27.10.1993
(51) Int. Cl.: G01D 5/26

(54) **DETECTEUR DE VARIATIONS D'UNE GRANDEUR PHYSIQUE**
DETEKTOR FÜR ÄNDERUNGEN EINER PHYSIKALISCHEN GRÖSSE
DETECTOR OF VARIATIONS IN A PHYSICAL QUANTITY

(30) Priorité: 03.11.1992 LU 88187
(43) Date de publication de la demande: 23.08.1995
(73) Titulaire: COMMUNAUTE ECONOMIQUE EUROPEENNE (CEE), L-2920 Luxembourg (LU)
(72) Inventeur: COUTSOMITROS, Constantin, I-21020 Ranco (IT); FRANCHI, Marco, I-21027 Ispra (IT)
(74) Mandataire: Weinmiller, Jürgen
(86) Numéro de dépôt international: EP9302978
(87) Numéro de publication internationale: WO9410538

(56) Documents cités:
- EP-A- 0 013 974
- WO-A-91/04460
- PATENT ABSTRACTS OF JAPAN vol. 7, no. 212 (P-224) 20 Septembre 1983 & JP-A-58 106 406
- PATENT ABSTRACTS OF JAPAN vol. 14, no. 405 (P-1100) 31 Août 1990 & JP-A-02 157 635
- PATENT ABSTRACTS OF JAPAN vol. 6, no. 175 (P-141)(1053) 9 Septembre 1982 & JP-A-57 093 206
- PATENT ABSTRACTS OF JAPAN vol. 7, no. 231 (P-229)(1376) 13 Octobre 1983 & JP-A-58 120 101
- DATABASE WPI Week 9244, Derwent Publications Ltd., London, GB; AN 92-364667 & SU-A-1 702 172
- SOVIET TECHNICAL PHYSICS LETTERS, vol. 17, no. 1, Janvier 1991, New York US, pages 50-51; Y.O. BARMENKOC et al.: 'Adaptive holographic interferometer for measurement of stepwise submicron displacements'
- SOVIET PHYSICS TECHNICAL PHYSICS, vol. 24, no, 2, Février 1979, New York US, pages 230-232; Z. FUZECHI : 'Improved interference-hologram method for measurement of displacement'
- OPTICS AND LASER TECHNOLOGY, vol. 21, no. 3, Juin 1989, Guildford, Surrey GB, pages 198-203; A.M. DARSKIJ et al.: 'Measurement of small displacements by speckle holography'

## Description

L'invention se réfère à un détecteur de variations d'une grandeur physique telle que température, intensité lumineuse ou pression, qui se distingue des détecteurs connus par sa grande sensibilité.

Il existe une grande variété de sondes pour mesurer une grandeur physique. Ainsi, par exemple, la température peut être mesurée par la dilatation d'un liquide ou par la dilatation différentielle de deux métaux; l'intensité lumineuse peut être mesurée par une photodiode et la pression peut être mesurée par un diaphragme associé à un condensateur. Ces méthodes, ainsi que d'autres méthodes connues à l'homme de l'art, présentent toutes une sensibilité limitée. Or, souvent on est moins intéressé de connaître en termes absolus la grandeur physique en question, mais plutôt les variations temporelles de cette grandeur.

Le but de l'invention est donc de proposer un détecteur d'une grandeur tel que défini ci-dessus, qui présente une sensibilité accrue. Selon l'invention, ce détecteur est caractérisé en ce qu'il comporte
- une cavité optique interférométrique composée de deux plaques holographiques en verre sur lesquels des réseaux interférométriques tridimensionnels ont préalablement été enregistrés et qui sont plaquées l'une sur l'autre, en enfermant entre elles une mince couche d'air, ladite grandeur physique étant susceptible d'agir sur cette cavité,
- un générateur de faisceau laser dirigeant son faisceau cohérent sur ladite cavité,
- et un récepteur qui capte la lumière réfléchie par ladite cavité optique ou ayant parcourue ladite cavité optique et qui est susceptible de faire apparaître les variations des franges d'interférence dues aux dites variations de la grandeur physique.

Dans une réalisation préférée, ce détecteur est placé sur une table isolée de vibrations parasites pour ne capter que la grandeur physique recherchée.

En ce qui concerne des exemples préférés de mise en oeuvre du détecteur selon la présente invention, référence est faite aux autres sous-revendications.

L'invention sera décrite ci-après plus en détail à l'aide d'un exemple de réalisation auquel se réfèrent les dessins.

La figure 1 montre schématiquement et en perspective les éléments du détecteur selon l'invention.

La figure 2 montre deux plaques holographiques d'une cavité optique utilisées dans le détecteur selon la figure 1.

La figure 3 montre schématiquement comment les réseaux interférométriques tridimensionnels sont enregistrés sur les plaques holographiques de la cavité optique.

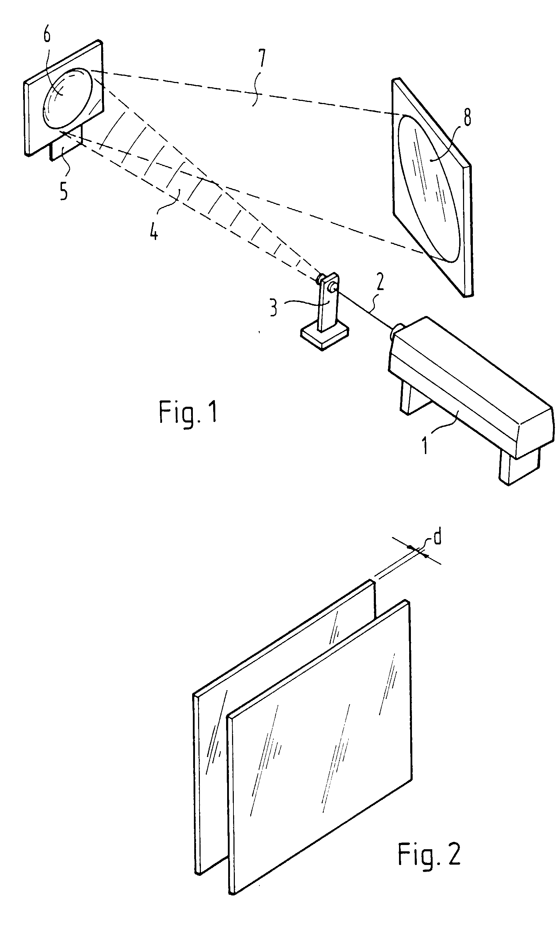

Le détecteur selon la figure 1 est susceptible de répondre à des variations de très faible amplitude d'une grandeur physique telle que la température, l'intensité lumineuse ou la pression. Il comporte à ces fins un générateur laser 1, qui émet un faisceau cohérent de lumière 2 vers une lentille divergente 3. De cette lentille émerge un faisceau divergent qui illumine une grande partie d'une face principale d'une cavité 6 montée sur un socle 5. La nature de cette cavité optique sera décrite ci-après plus en détail à l'aide de la figure 2. La lumière 7 réfléchie de la cavité 6 est reçue sur un écran de visualisation 8 constitué dans le cas le plus simple par un écran de projection.

La figure 2 montre deux plaques holographiques constituées chacune d'un substrat en verre qui porte sur une face une émulsion photographique, sur laquelle on a préalablement enregistré un réseau interférométrique tridimensionnel tel que par exemple une soi-disante lentille holographique. Les deux enregistrements sont identiques. Les émulsions sont pour l'un des substrats disposées sur la face en regard de l'autre substrat, alors que pour l'autre substrat, l'émulsion est disposée du côté opposé au premier substrat. Les substrats sont rectangulaires d'une dimension 10,2 x 12,7 cm, avec une épaisseur de 1,5 mm. En variante, on a choisi les dimensions 30 x 40 cm et une épaisseur de 3,5 mm. Sur la figure 2, les deux plaques holographiques ont été représentées à distance mutuelle pour rendre plus claire la disposition des émulsions, mais en réalité, les plaques sont appliquées l'une sur l'autre en ne laissant subsister que très peu d'air entre les deux plaques. Ce peu d'air définit avec les supports la cavité optique proprement dite.

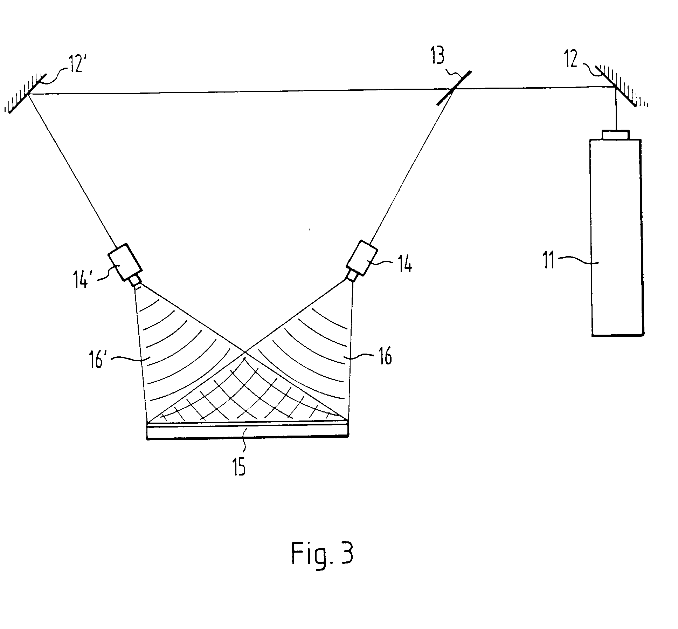

La figure 3 montre schématiquement comment les plaques holographiques 15 sont préparées sur un support photosensible. Un laser 11 envoie un faisceau cohérent, le cas échéant par un miroir 12, sur un séparateur de faisceaux 13 constitué par un miroir semiréfléchissant. Un des faisceaux est directement dirigé sur l'émulsion de la plaque par l'intermédiaire d'un filtre spatial 14, alors que l'autre est renvoyé par un second miroir 12' vers un second filtre spatial 14' pour atteindre cette émulsion selon un autre angle d'incidence. Les ondes sphériques des faisceaux divergents 16 et 16' créent en coopération le réseau tridimensionnel dans l'émulsion sur la plaque holographique 15 qu'il faut alors développer et fixer. On prépare deux plaques holographiques de la même façon et on les réunit pour constituer la cavité optique 6 telle que décrite ci-dessus.

En choisissant la disposition selon la figure 1, on observe sur l'écran de visualisation 8 un système de franges qui dépend entre autres de l'épaisseur du film d'air enfermé entre les deux substrats.

L'approche d'un doigt humain à une distance d'un mètre de la cavité optique 6 suffit pour induire un changement de frange d'interférence. Dès que ce doigt est retiré, les franges reviennent à leur position initiale. Le temps de réponse du système varie entre quelques fractions d'une seconde et quelques secondes, dépendant de la distance entre la cavité 6 et ledit doigt.

Une autre expérience intéressante pour donner une idée sur la sensibilité du détecteur est la suivante: En mettant un corps humain devant le détecteur, on observe une modification du réseau des franges. Après un certain temps, inférieur à une seconde, les franges se stabilisent en absence de mouvement du corps. Si alors on interpose entre le détecteur et le corps une feuille de papier, les franges réagissent aussitôt en prenant une nouvelle configuration. Après élimination de la feuille de papier, les franges reviennent à leur position initiale. Cette expérience a été vérifiée jusqu'à une distance de 1,8 mètres entre le corps et la feuille d'une part et la cavité 6 d'autre part.

Pour estimer la sensibilité du système, une comparaison a été faite avec des thermistors. La résolution locale maximale en température des thermistors est de l'ordre d'un millième de degré Celsius. En plaçant un corps humain à 0,3 m d'un thermistor, l'interposition d'une feuille de papier ne modifie pas le signal de sortie du thermistor. En rapprochant le corps humain à 0,15 m du thermistor, on obtient un signal de réponse, mais cette réponse est nettement plus lente que pour le détecteur selon l'invention.

Notons enfin que les caméras à infrarouge ont une résolution maximale d'un millième de degré Celsius.

Le détecteur est aussi sensible à des sources lumineuses. En irradiant la cavité optique 6, par exemple à partir de la face arrière dans la figure 1, par une lumière blanche avec une puissance d'un millième de Watt par m², on modifie nettement les franges sur l'écran 8. La réponse du détecteur aux signaux lumineux est à temps réel. Si l'on envoie la lumière d'un laser (non représenté) sur la cavité 6 et si l'on module la lumière de ce laser, on observe une modulation correspondante des franges sur l'écran 8. La réponse la plus rapide enregistrée jusqu'à présent est de l'ordre de 10 nanosecondes, cette valeur étant cependant due à la limite de la rapidité de la source laser disponible.

Le détecteur est enfin sensible à la pression mécanique par l'intermédiaire de l'air ambiant. Tout signal créant une variation de pression d'au moins 10⁻⁸ atmosphères conduit à une modification notable des franges sur l'écran 8.

La sensibilité du détecteur selon l'invention accroît avec la taille des substrats de la cavité optique. En choisissant cette taille convenablement, on peut optimiser la discrimination entre le bruit parasite et le signal utile.

Comme le détecteur selon la présente invention est particulièrement sensible à des variations de plusieurs grandeurs physiques, il est nécessaire, si l'on veut surveiller une grandeur particulière, de veiller à éliminer toute influence d'autres grandeurs. A ces fins, il est particulièrement utile d'éliminer les vibrations parasites telles qu'elles peuvent provenir par exemple du trafic routier passant à côté de l'enceinte surveillée. Il existe des tables massives qui sont isolées de telles vibrations parasites.

L'invention n'est pas limitée à l'exemple de réalisation décrit ci-dessus. On peut en particulier rendre la détection indépendante de l'observation continue de l'écran 8 en disposant à la place de l'écran un photomultiplicateur ou des photodétecteurs, qui mesurent la lumière incidente à des points discrets de l'interférogramme, une unité de traitement de signaux permettant alors de détecter toute modification de la répartition des franges d'interférence.

## Revendications

1. Détecteur de variations d'une grandeur physique telle que température, intensité lumineuse ou pression,
caractérisé en ce qu'il comporte
- une cavité optique interférométrique (6) composée de deux plaques holographiques en verre sur lesquelles des réseaux interférométriques tridimensionnels ont préalablement été enregistrés et qui sont appliqués l'une sur l'autre en enfermant entre elles une mince couche d'air, ladite grandeur physique étant susceptible d'agir sur cette cavité,
- un générateur de faisceau laser (1) dirigeant son faisceau cohérent (2, 4) sur ladite cavité,
- et un récepteur (8) qui capte la lumière (7) réfléchie par ladite cavité optique ou ayant parcourue ladite cavité optique et qui est susceptible de faire apparaître les variations des franges d'interférence dues aux dites variations de la grandeur physique.

2. Détecteur selon la revendication 1, caractérisé en ce qu'il est placé sur une table isolée de vibrations parasites.

3. Détecteur selon l'une des revendications précédentes, caractérisé en ce que ledit réseau interférométrique tridimensionnel est constitué par une lentille holographique.

4. Détecteur selon l'une des revendications précédentes, caractérisé en ce que l'une des plaques holographiques porte son réseau sur la face en regard de l'autre plaque alors que l'autre plaque holographique porte son réseau sur la face opposée.

## Patentansprüche

1. Detektor für die Erfassung von Veränderungen einer physikalischen Größe wie Temperatur, Lichtstärke oder Druck,
dadurch gekennzeichnet, daß er aufweist
- einen interferometrischen optischen Hohlraum (6), der aus zwei holographischen Glasplatten besteht, auf denen vorher dreidimensionale interferometrische Gitter aufgetragen wurden und die gegeneinander gelegt sind, indem sie zwischen sich eine dünne Luftschicht einschließen, wobei die physikalische Größe auf diesen Hohlraum einwirken kann,
- einen Laserstrahlgenerator (1), der seinen kohärenten Strahl (2, 4) auf diesen Hohlraum richtet,
- und einen Empfänger (8), der das vom optischen Hohlraum reflektierte Licht (7) oder das Licht, das diesen optischen Hohlraum durchquert hat, erfaßt und der die Veränderungen der Interferenzstreifen aufgrund der Veränderungen der physikalischen Größe sichtbar macht.

2. Detektor nach Anspruch 1, dadurch gekennzeichnet, daß er auf einem von Störvibrationen isolierten Tisch angeordnet ist.

3. Detektor nach einem der vorhergehenden Ansprüche, dadurch gekennzeichnet, daß das dreidimensionale interferometrische Gitter aus einer holographischen Linse besteht.

4. Detektor nach einem der vorhergehenden Ansprüche, dadurch gekennzeichnet, daß eine der holographischen Platten ihr Gitter auf der der anderen Platte zugewandten Seite trägt, während die andere holographische Platte ihr Gitter auf der abgewandten Seite trägt.

## Claims

1. A device for detecting variations in a physical quantity such as temperature, light intensity or pressure, characterized in that it comprises
- an interferometric optical cavity (6) composed of two holographic glass plates, on which three-dimensional interferometric structures have been previously recorded and which are applied one against the other via a thin air layer in between, said physical quantity being able to act on this cavity,
- a laser generator (1) directing its coherent beam (2, 4) on said cavity,
- and a receiver (8) capturing light (7) reflected by said optical cavity or having traversed that optical cavity and capable of showing variations of the interference fringes due to said variations in the physical quantity.

2. A detector device according to claim 1, characterized in that it is placed on a table which is isolated against parasite vibrations.

3. A detector device according to one of the preceding claims, characterized in that the three-dimensional interferometric structure is constituted by a holographic lens.

4. A detector device according to one of the preceding claims, characterized in that the structure of one of the holographic plates faces the other plate, whereas the structure of said other holographic plate is recorded on the opposite surface.
